# EUROPEAN PATENT APPLICATION

(11) **EP 2 844 001 A1**
(43) Date of publication of application: **04.03.2015**
(21) Application number: 13782556.8
(22) Date of filing: 19.03.2013
(51) Int. Cl.: H04W 40/28, H04L 12/701, H04W 40/20

(54) **COMMUNICATION SYSTEM, AND PATH CONTROL METHOD**

(30) Priority: 27.04.2012 JP 2012102742
(71) Applicant: NEC Corporation, Tokyo 108-8001 (JP)
(72) Inventor: TAMURA, Toshiyuki, Tokyo 108-8001 (JP); SCHMID, Stefan, Heidelberg 69115 (DE)
(74) Representative: MacDougall, Alan John Shaw
(86) International application number: PCT/JP2013/001861
(87) International publication number: WO 2013/161178

(57) **Abstract**

An object is to provide a communication system and a method for path control that can realize flexible routing in a mobile communication network. The communication system according to the present invention includes a data transfer apparatus (11), a gateway (12) for performing predetermined data processing on data transferred from the data transfer apparatus (11), and a path control apparatus (13) for controlling, when data addressed to a virtual relay apparatus is transmitted to the data transfer apparatus (11), the data transfer apparatus (11) to set a destination of the data to the gateway (12) and to transfer the data to the gateway (12) without transferring the data to the virtual relay apparatus.

## Description

### Technical Field

The present invention relates to a communication system, and in particular, to a communication system in which a path control apparatus performs path control inside the communication system.

### Background Art

In recent years, it has been suggested to realize a flexible system configuration by operating a plurality of virtual machines on one physical server. In such a system, obstacle avoidance, load distribution and the like are realized by live migration technology that moves virtual machines to another physical server or a memory region without stopping the virtual machines in operation.

Patent Literature 1 discloses a configuration in which, in a computer system where a plurality of computers are connected via a network, the computer system is managed using a VM management apparatus and an OpenFlow controller in order to manage management of a network and management of computers in a unified manner. The OpenFlow controller switches a virtual machine for communication according to a MAC address in a packet to thereby reduce the time required to stop the virtual machine that is viewed from a network side associated with migration of the virtual machine.

The above-mentioned open controller is a technique, the standard specification of which is formulated by the OpenFlow consortium. In a network using the OpenFlow, central control on the network using an OpenFlow controller simplifies the operation of the network. Further, in the network using the OpenFlow, path control by the unit of flow can realize flexible routing, thereby improving fault tolerance.

### Citation List

### Patent Literature

Patent Literature 1: Japanese Unexamined Patent Application Publication No. 2011-070549

### Summary of Invention

### Technical Problem

As a network to be controlled using the OpenFlow, there is 3GPP EPS (Evolved Packet System) architecture. The EPS specified in the 3GPP technical specification is composed of LTE (Long Term Evolution), W-CDMA (Wideband Code Division Multiple Access), GERAN (GSM (registered trademark) EDGE Radio Access Network),high speed wireless communication realized by Non-3GPP access represented by WiFi (registered trademark) and a flexible core network provided by the EPC (Evolved Packet Core). In the 3GPP EPS architecture, an SGW (a Serving GW) that operates as a mobility anchor apparatus disposed on a user data transmission path between a base station for communicating with terminals and a gateway apparatus (PGW: Packet Data Network GW) that is connected to an external network. That is, user data is transferred via UE that indicates a mobile communication apparatus and a base station (eNB) used in LTE, a base station apparatus (RNS) used in W-CDMA, or a base station apparatus (BSS) used in GERAN, and SGW and PGW. When many processing apparatuses are disposed on the user data transmission path, there is a problem that OPEX and CAPEX costs increase, that is, excessive capital expenditure and operational expense are required, and also a problem that transmission of the user data is delayed. Thus, it has been desired to operate a network that introduces the OpenFlow capable of realizing the flexible routing into the 3GPP EPS architecture.

In order to solve such problems, an object of the present invention is to provide a communication system and a method for a path control that can realize flexible routing in a communication network.

### Solution to Problem

A first exemplary aspect of the present invention is a communication system that includes: a data transfer apparatus; a gateway for performing predetermined data processing on data transferred from the data transfer apparatus; and path control means for controlling, when data addressed to a virtual relay apparatus is transmitted to the data transfer apparatus, the data transfer apparatus to set a destination of the data to the gateway and to transfer the data to the gateway without transferring the data to the virtual relay apparatus.

A second exemplary aspect of the present invention is a method for path control of a communication system including a data transfer apparatus and a gateway for performing predetermined data processing on data transmitted from the data transfer apparatus. The method includes controlling, when data addressed to a virtual relay apparatus is transmitted to the data transfer apparatus, the data transfer apparatus to set a destination of the data to the gateway and to transfer the data to the gateway without transferring the data to the virtual relay apparatus.

### Advantageous Effects of Invention

According to the present invention, it is possible to provide a communication system and a method for path control that can realize a flexible network in a communication network.

### Brief Description of Drawings

Fig. 1 is a block diagram of a communication system according to a first exemplary embodiment;
Fig. 2 is a block diagram of the communication system according to the first exemplary embodiment;
Fig. 3 is a block diagram of the communication system according to the first exemplary embodiment;
Fig. 4 is a diagram for explaining an EPS bearer set up in the communication system according to the first exemplary embodiment;
Fig. 5 is a diagram for explaining a routing table according to the first exemplary embodiment;
Fig. 6 is a diagram showing a flow of attach processing according to the first exemplary embodiment;
Fig. 7 is a diagram showing a flow of processing after UE received an "RRC Connection Reconfiguration" according to the first exemplary embodiment;
Fig. 8 is a diagram showing a flow of path control processing according to the first exemplary embodiment;
Fig. 9 is a diagram showing a flow of path control processing at the time of handover according to a second exemplary embodiment;
Fig. 10 is a diagram showing a flow of the path control processing at the time of handover according to the second exemplary embodiment;
Fig. 11 is a diagram showing a flow of the path control processing at the time of handover according to the second exemplary embodiment;
Fig. 12 is a diagram showing a flow of processing when UE transitions to an Idle state according to a third exemplary embodiment; and
Fig. 13 is a diagram showing a flow of processing when UE performs a Service Request according to the second exemplary embodiment.

### Description of Embodiments

### (First exemplary embodiment)

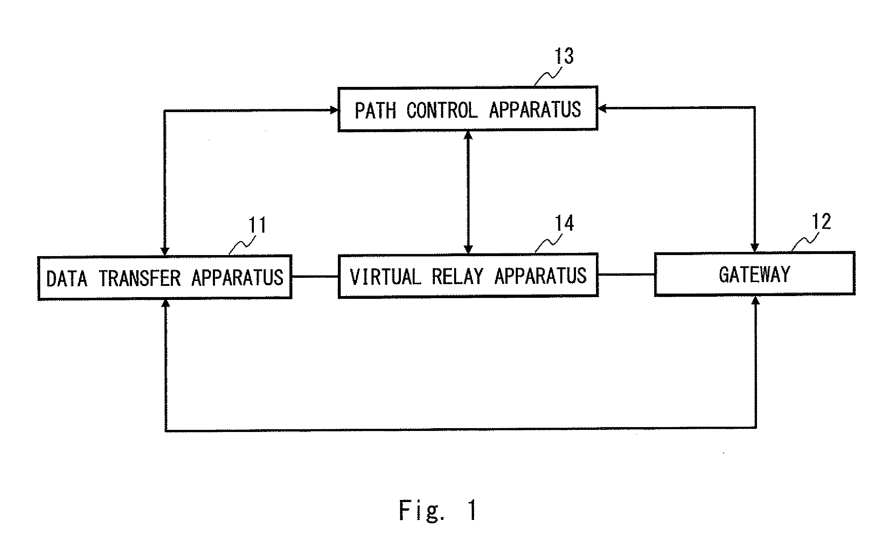

Hereinafter, exemplary embodiments of the present invention shall be explained with reference to the drawings. The present invention can be applied to OpenFlow, VXLAN, NVGRE, DOVE, Cisco NEXUS, Juniper QFabric (registered trademark) and the like. In the following exemplary embodiments, an example using the OpenFlow shall be mainly explained. Firstly, a configuration example of a communication system according to a first exemplary embodiment shall be explained. The communication system of Fig. 1 includes a data transfer apparatus 11, a gateway 12, and a path control apparatus 13.

The data transfer apparatus 11 may be, for example, a switch for transferring data based on a MAC layer or the like and a router for transferring data based on an IP address or the like.

The gateway 12 performs predetermined data processing on the data transferred from the data transfer apparatus. The data transferred from the data transfer apparatus may be, for example, packet data or the like. The predetermined data processing includes various processing, for example, authentication processing using a transmission source address of the packet data, storage processing of the packet data, and display processing for displaying data on a display apparatus. Further, the data processing includes data transfer processing for transferring received data to another apparatus.

When data addressed to a virtual relay apparatus 14 is transmitted to the data transfer apparatus 11, the path control apparatus 13 controls the data transfer apparatus 11 to set a destination to the gateway 12 and to change the data so that it is routed to the gateway 12 without transferring the data to the virtual relay apparatus 14.

The virtual relay apparatus 14 shall be explained below. For example, when data transfer is performed between the gateways, in some cases, the data transfer is performed always via the relay apparatus. Further, one or a plurality of data transfer apparatuses such as a router may be disposed between the gateway and the relay apparatus. In such a case, the gateway sets the relay apparatus as the destination address. The relay apparatus receives the data to which the address of its own apparatus is set and transfers the data to another gateway.

At the time of reconfiguring a network, the relay apparatus may be eliminated, for example, in an attempt to reduce OPEX and CAPEX. Alternatively, by including the function of the relay apparatus in another gateway, a control apparatus or the like, the relay apparatus may become unnecessary. Along with a change in the configuration of the network, when the destination address of the gateway is changed from the relay apparatus to another apparatus, it is necessary to perform an address change operation in a plurality of gateways, thereby causing a burden to a network administrator and the like. Accordingly, when the destination address of the gateway stays set to an address of the existing relay apparatus and the routing table in the data transfer apparatus such as a router is changed, data to which the address of the relay apparatus is set as the destination address can be routed to another gateway.

That is, the virtual relay apparatus may be a relay apparatus that is not actually disposed on a network. Further, by setting the virtual relay apparatus to the gateway as the destination address and updating the routing table in the data transfer apparatus such as a router, it is possible to change the path between the gateways without changing the setting of the gateways. In addition, the present invention is effective for a network that is configured to always set the relay apparatus as the destination address.

As described above, by using the path control apparatus in the communication system of Fig. 1, routing control can be performed on the data transfer apparatus 11 such as a router. In this manner, the path control apparatus can control the data transfer apparatus 11 to change the destination address to the gateway even when the data, the destination address of which has been set to the virtual relay apparatus, is transmitted to the data transfer apparatus 11. By doing so, when the virtual relay apparatus is set as the destination address, it is possible to transfer the data to the gateway without actually using the relay apparatus. As the relay apparatus can be eliminated, OPEX and CAPEX can be reduced in an operator for managing the network.

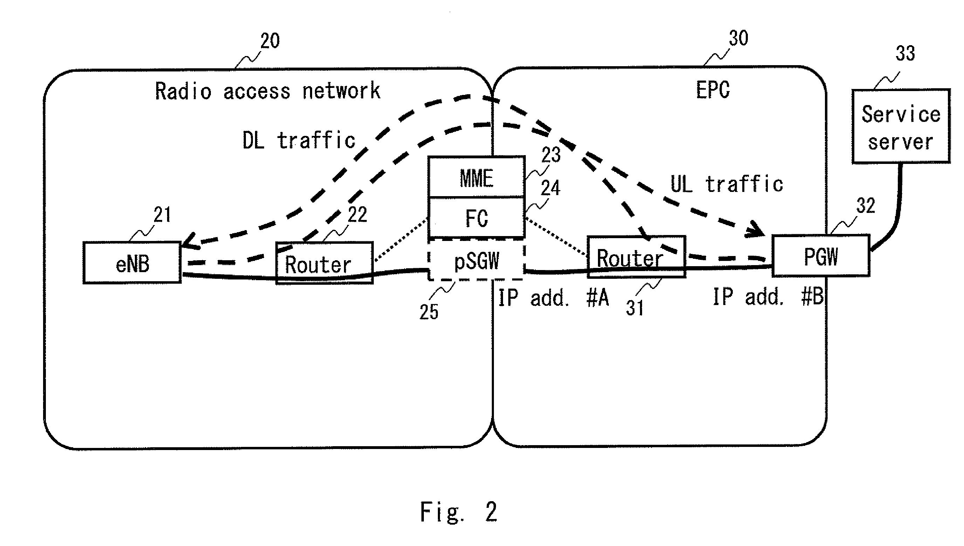

Next, a detailed configuration example of the communication system according to the first exemplary embodiment of the present invention shall be explained using Fig. 2. The communication system in Fig. 2 is composed of an RAN 20 (Radio Access Network) and an EPC 30 (Evolved Packet Core). The RAN 20 and the EPC 30 have configurations specified in the 3GPP technical specification. The RAN 20 is a network connected to a user via wireless access. The EPS 30 is a system for accommodating a variety of access networks.

The RAN 20 includes an eNB 21, a Router 22, an MME (Mobility Management Entity) 23, and an FC (Flow Controller) 24. The EPC 30 includes a Router 31, a PGW 32, and a Service server 33. Further, the MME 23 and the FC 24 operate in cooperation with each other, and the FC 24 has a function of a pSGW (a virtual SGW) 25. The MME 23 and FC 24 may be configured using the same apparatus or configured using different apparatuses.

When the FC 24 and the MME 23 are configured as the same apparatus, by cooperation between the flow control provided by the FC 24 and the mobility control provided by the MME 23 inside the same apparatus, it is possible to speed up the processing, thereby preventing deterioration of services that is caused by path control (e.g., an instantaneous service interruption).

The eNB 21 is a base station that communicates with a communication terminal using the LTE scheme that is specified by 3GPP as a wireless scheme. The communication terminal includes a mobile communication terminal such as a cell phone terminal and a terminal used in MTC (Machine Type Communication). The Routers 22 and 31 transfer data to an adjacent apparatus using an IP address and other identifiers. Other identifiers may be, for example, a TEID (Tunnel Endpoint Identifier). The TEID is an ID for identifying an apparatus which will be an end point of a bearer that is set between apparatuses. That is, the TEID is an ID for identifying apparatuses which are at both ends of the bearer. For example, a bearer using the TEID may be set between the eNB and SGW, between the SGW and the PGW, or between the eNB and the PGW. The Routers 22 and 31 may execute transfer processing of data using the routing table that associates the IP address with a transfer destination apparatus.

The MME 23 performs mobility management, session management, and service management on the communication terminal that performs communication using the LTE scheme that is specified by 3GPP as a wireless scheme.

The FC 24 determines a transmission path between the eNB 21 and the PGW 32 by the unit of flow and notifies the Routers 22 and 31 of the determined path. The Router 22 transfers data according to the path information transmitted by the FC 25. The flow is communication traffic identified by a combination of arbitrary addresses in the respective layers of L1 (a physical port etc.), L2 (MAC), L3 (IP), and L4 (a port number) or arbitrary addresses in the respective layers of L1 (a physical port etc.), L2 (MAC), L3 (IP), and L4 (a port number), and an identifier for flow control. Moreover, the unit of flow may be the unit of an EPS bearer determined by an IP address and a TEID or a combination or the like of a plurality of EPS bearers. Further, the unit of flow may be the unit of subscriber (UE), the unit of service or the like.

The FC 24 combines the addresses of the respective layers or the identifier according to a specific rule so as to identify the communication traffic. The path determined by the FC 24, which is the path information transmitted to the Routers 22 and 31, shall be referred to as a routing policy.

The PGW 32 is a logical node having an interface function between the EPS 30 and the Service server 33 that is disposed in the External network. That is, transmission and reception between a communication apparatus inside the EPS 30 and the Service server 33 is performed via the PGW 23.

The Service server 33 is a server apparatus disposed inside the External network and, for example, a Web server, a storage apparatus and the like that stores video data.

Next, a flow of data inside the communication system in Fig. 2 shall be explained. The eNB 21 transmits user traffic (UL Traffic) sent from a user to the PGW 32 via the Router 22. The Router 22 uses the routing table that associates the destination address with a transfer destination apparatus so as to transfer the user traffic transmitted from the eNB 21 to the PGW 32.

The pSGW is an SGW, which is a logical node specified by the 3GPP standard. As an apparatus, for convenience, the pSGW is disposed inside the MME in order to realize an incoming operation. However, as shown in Fig. 2, the pSGW does not handle the user data transmitted and received between the eNB and the PGW.

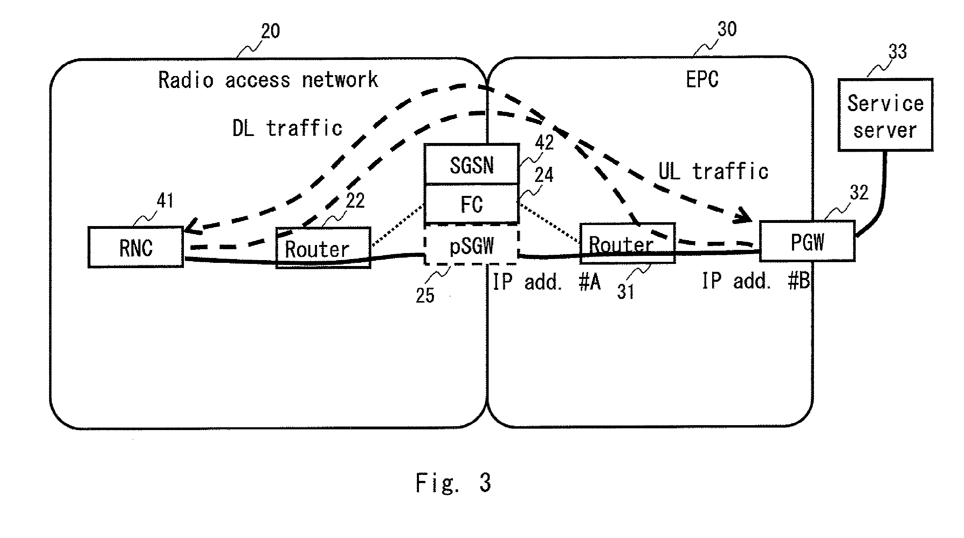

Next, a detailed configuration example of a communication system that is different from the one in Fig. 2 shall be explained using Fig. 3. The communication system in Fig. 3 has the same configuration as the configuration in Fig. 2 except that the eNB 21 in the communication system in Fig. 2 is replaced by an RNC 41 and the MME 23 in the communication system in Fig. 2 is replaced by an SGSN 42. The RNC 41 controls base stations that are mainly used in the 3G system. For example, the RNC 41 performs handover control and the like between base stations. The SGSN 42 is connected to a wireless access system that is used in the 3G system and performs data processing on U-Plane data and C-Plane data. As the configuration other than the RNC 41 and the SGSN 42 in Fig. 3 is the same as the configuration in Fig. 2, a detailed explanation of the configuration other than the RNC 41 and the SGSN 42 in Fig. 3 shall be omitted. Further, in Fig. 3, by using a BSC (Base Station Controller) in place of the RNC, the present invention can be applied to a so-called 2G system.

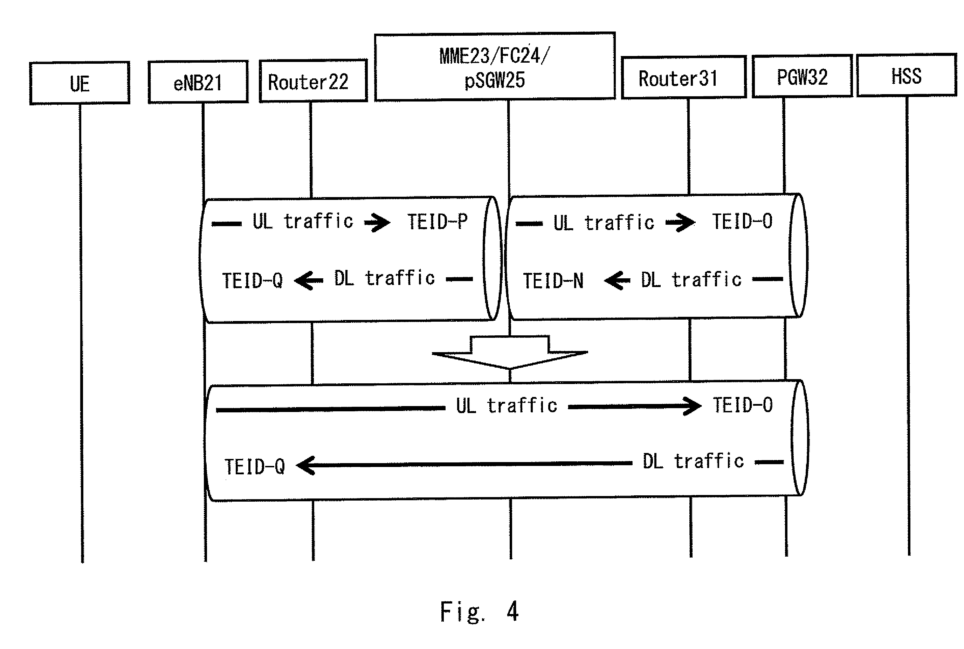

Next, an EPS bearer that is set up in the communication system in Fig. 2 shall be explained using Fig. 4. Firstly, an EPS bearer to which the present invention is not applied shall be explained. When the present invention is not applied to an EPS bearer, the EPS bearer is set between the eNB 21 and the pSGW 25 and between the pSGW 25 and the PGW 32. As a TEID, P and Q are set to the EPS bearer between the eNB 21 and pSGW 25. The TEID-P is a TEID value that is set to the pSGW 25, while the TEID-Q is a TEID value that is set to the eNB 21. The eNB 21 transmits Uplink traffic (UL traffic) addressed to the pSGW 25 using the EPS bearer to which the TEID-P is set. Further, the pSGW 25 transmits Downlink traffic (DL traffic) addressed to the eNB 21 using the EPS bearer to which the TEID-Q is set.

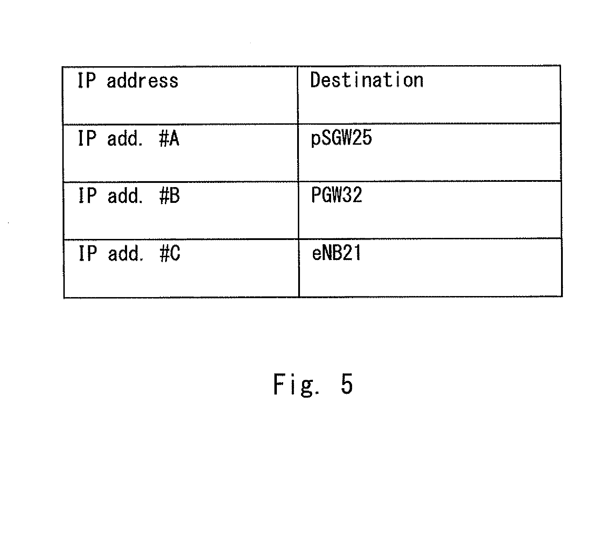

The Router 22 transfers data according to a correspondence table (or a routing table) shown in Fig. 5 associating IP addresses with apparatuses. Specifically, an IP add #A, which is an IP address, is associated with the pSGW 25, an IP add #B, which is an IP address, is associated with the PGW 32, and an IP add #C, which is an IP address, is associated with the eNB 21.

As a TEID, O and N are set to the EPS bearer between the pSGW 25 and the PGW 32. The TEID-O is a TEID value that is set to the PGW 32, while the TEID-N is a TEID value that is set to the pSGW 25. The pSGW 25 transmits UL traffic addressed to the PGW 32 using the EPS bearer to which the TEID-O is set. Further, the PGW 32 transmits DL traffic addressed to the pSGW 25 using the EPS bearer to which the TEID-N is set. The Router 31 transfers data according to the correspondence table (or the routing table) shown in Fig. 5 associating the IP addresses with apparatuses.

Next, an EPS bearer to which the present invention is applied shall be explained. In Fig. 4, the MME 23, the FC 24, and the pSGW 25 are configured as the same apparatus. When the present invention is applied to an EPS bearer, the EPS bearer is set between the eNB 21 and the PGW 32. As a TEID, O and Q are set to the EPS bearer between the eNB 21 and the PGW 32.

An operation of the EPS bearer between the eNB 21 and the PGW 32 shall be explained below. At the time of transmitting the UL traffic, in a manner similar to the case in which the present invention is not applied to an EPS bearer, the eNB 21 transmits data to the Router 22 using the IP add #A as a destination IP address and P as the TEID. As for the data to which the IP add #A is set as the destination IP address and the TEID-P is set as the destination TEID, the Router 22 changes the destination IP address to the IP add #B that is associated with the PGW 32 and changes the destination TEID to the TEID-O. By doing so, the EPS bearer that ends at the eNB 21 and the PGW 32 can be set without passing through the pSGW 25.

Similarly, for the DL traffic transmitted from the PGW 32 to the eNB 21, the PGW 32 transmits data to the Router 31 using the IP add #A as a destination IP address and N as the TEID. As for the data to which the IP add #A is set as the destination IP address and the TEID-N is set as the destination TEID, the Router 31 changes the destination IP address to the IP add #C that is associated with the eNB 21 and changes the destination TEID to the TEID-Q. The Router 31 transmits the data including the changed destination IP address to the eNB 21.

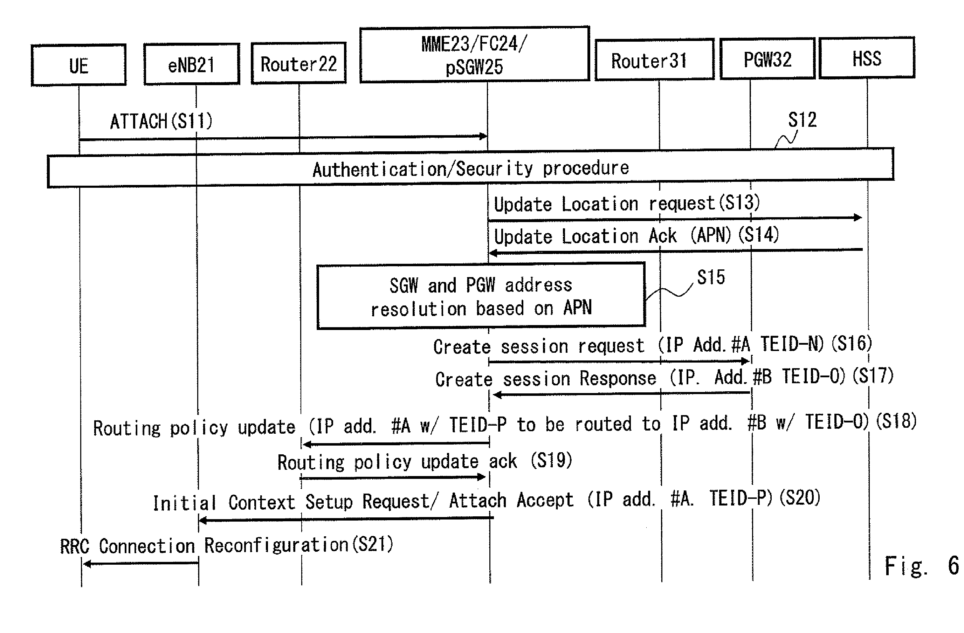

Next, a flow of attach processing of UE (User Equipment) according to the first exemplary embodiment of the present invention shall be explained using Fig. 6. The UE is a name indicating a mobile communication apparatus or the like that is used in the 3GPP system. Further, in this drawing, the MME 23, the FC 24, and the pSGW 25 are configured using the same apparatus. This apparatus shall be referred to as a combo node. Firstly, the UE transmits an ATTACH signal to the combo node (the MME 23) so as to request a registration in a mobile communication network (S11). The term combo node (the MME 23, indicates that the function of the MME 23 in the combo node is used. The terms combo node (the FC 24) and combo node (the pSGW 25) described below also indicate that the functions of the FC 24 and the pSGW 25 are used, respectively. Next, the combo node (the MME 23) executes authentication processing and the like on the UE that has transmitted the ATTACH signal (Authentication/Security procedure; S12). Next, the combo node (the MME 23) transmits an "Update Location request" to the HSS (Home Subscriber Server) in order to obtain subscriber information and the like of the UE (S13). The HSS transmits an "Update Location Ack" as a response signal to the "Update Location request" (S14). The "Update Location Ack" includes information regarding an APN (Access Point Name) to which the UE is connected.

Next, the combo node (the MME 23) performs address resolution processing on the SGW and the PGW based on the APN information (S15). Specifically, the combo node (the MME 23) extracts an address of the PGW corresponding to the trasnmitted APN. Further, the combo node (the MME 23) extracts an address of the pSGW 25 that is mounted on the same apparatus as the apparatus on which the MME 23 is mounted.

Next, the combo node (MME 23) transmits a "Create session request" to the PGW 32 in order to establish the EPS bearer with the PGW 32 (S16). The "Create session request" includes the IP add #A and the TEID-N that are set to the pSGW 25. The PGW 32 transmits a "Create session Response" to the combo node (the MME 23) as a response signal to the "Create session request" (S17). The "Create session Response" includes the IP add #B and the TEID-O that are set to the PGW 32.

Next, the combo node (the FC 24) transmits a "Routing policy update" to the Router 22 (S18). The "Routing policy update" specifies that when the IP add #A is set as the destination IP address and data to which the TEID-P is set is transmitted, the destination IP address is changed to the IP add #B and the TEID is changed to the TEID-O so as to transfer the data. When the transmitted routing policy is reflected, the Router 22 transmits a "Routing policy update ack" to the combo node (FC 24) (S19).

Next, the combo node (the MME 23) transmits an "Initial Context Setup Request/Attach Accept" to the eNB 21 (S20). The "Initial Context Setup Request/Attach Accept" includes the IP add #A and the TEID-P which will be set to the pSGW 25 as information regarding the pSGW 25.

Next, the eNB 21 notifies the UE of an "RRC Connection Reconfiguration" (S21).

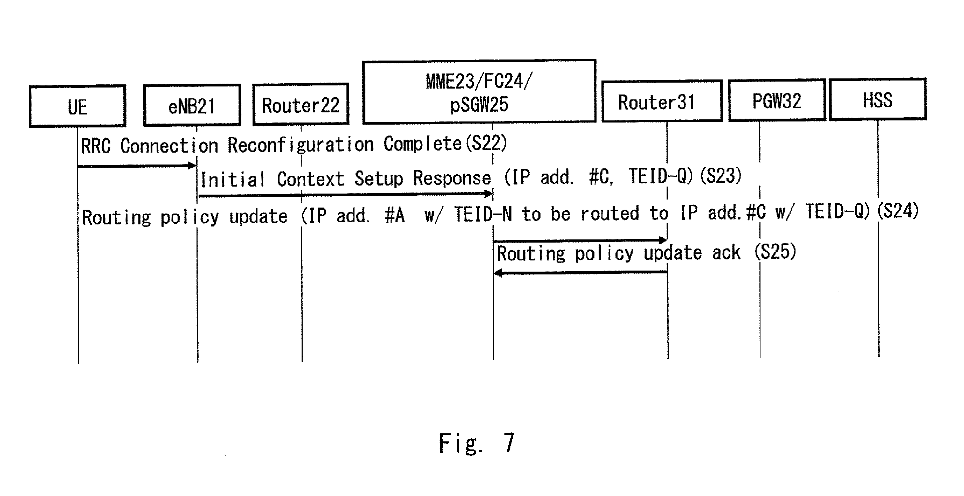

Next, a flow of processing after the UE receives the "RRC Connection Reconfiguration" shall be explained using Fig. 7. In Step S21 in Fig. 6, after the UE receives the "RRC Connection Reconfiguration", the UE transmits an "RRC Connection Reconfiguration Complete" to the eNB 21 (S22). Next, the eNB 21 transmits an "Initial Context Setup Response" to the combo node (the MME 23) (S23). The "Initial Context Setup Response" includes the IP add #C and the TEID-Q which will be set to the eNB 21.

Next, the combo node (the FC 24) transmits the "Routing policy update" to the Router 31. The "Routing policy update" specifies that when the IP add #A is set as the destination IP address and data to which the TEID-N is set is transmitted, the destination IP address is changed to the IP add #c and the TEID is changed to the TEID-Q so as to transfer the data. When the transmitted routing policy is reflected, the Router 31 transmits the "Routing policy update ack" to the combo node (the FC 24) (S25).

As explained so far, by using the combo node according to the first exemplary embodiment of the present invention, change processing of the routing policy in the Routers 22 and 31 can be included in the attach procedure of the UE. That is, in the attach procedure, when the Routers 22 and 31 are notified of the IP addresses and the TEIDs of the eNB 21 and the PGW 32, the combo node (the FC 24) can change the routing policy to indicate the Routers 22 and 31 to directly transfer the data addressed to the pSGW 25 to the PGW 32 or the eNB 21.

Further, by realizing the MME 23, the FC 24, and the pSGW 25 as the same apparatus or by operating the MME 23, the FC 24, and the pSGW 25 in cooperation with each other, signals transmitted and received between the MME 23 and the pSGW 25 can be omitted. When the MME 23 obtains, for example, address information (the IP address and the TEID) for receiving the DL traffic from the eNB 21, a signal for notifying the pSGW 25 of the obtained information can be omitted. As the signal which will be omitted, there is, for example, a "Modify Bearer Request" and a "Modify Bearer Response" in the attach procedure that is specified in the 3GPP technical specification.

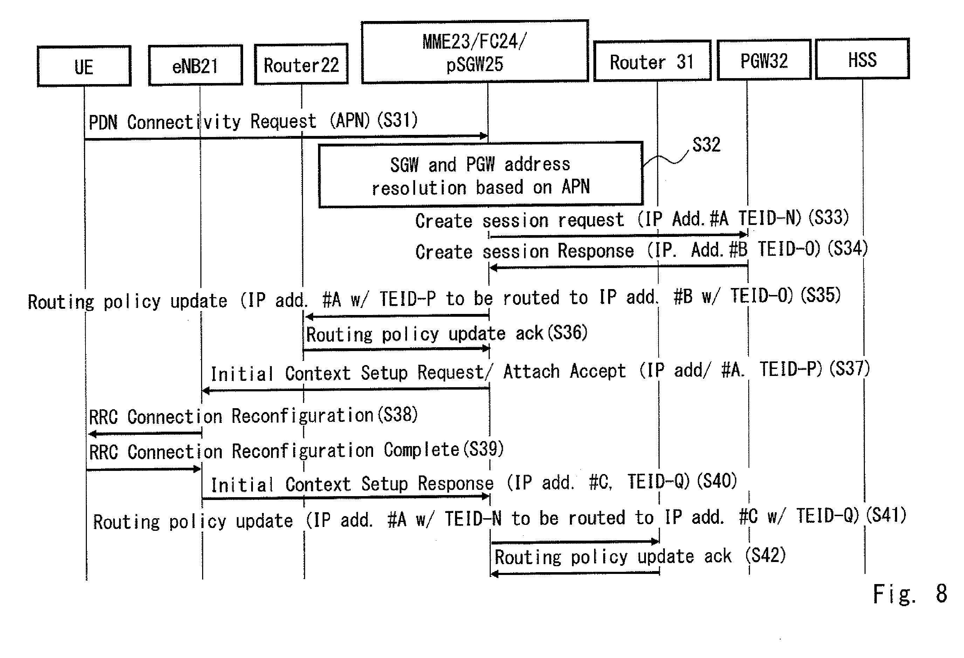

Next, a flow of path control processing that is different from the cases in Figs. 6 and 7 shall be explained using Fig. 8. Firstly, the UE transmits a "PDN Connectivity Request" to the combo node (the MME 23) in order to connect to the Service server 33 of an external network (S31). The "PDN Connectivity Request" includes the information regarding the APN.

As Steps S32 to 42 are the same as Steps S15 to 21 in Fig. 6 and Steps 22 to 25 in Fig. 7, a detailed explanation of Steps S32 to 42 shall be omitted.

### (Second exemplary embodiment)

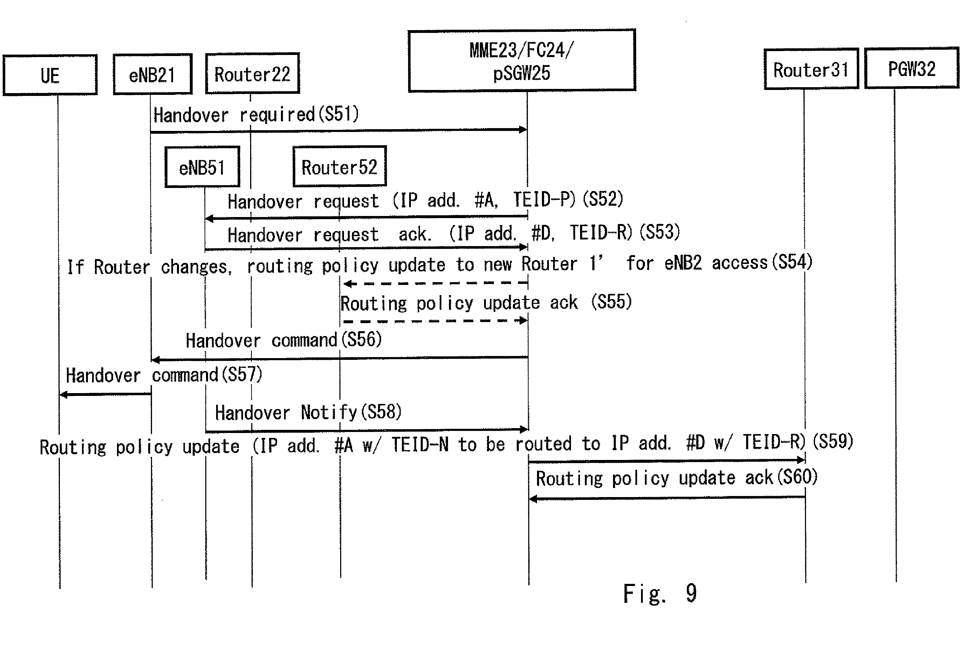

Next, a flow of path control processing at the time of handover shall be explained using Fig. 9. Fig. 9 illustrates the flow of the path control processing at the time of handover (S1 based HO) using S1. The S1 is an interface between the eNB and the MME. In Fig. 9, the eNB 21 is a source eNB (a Source eNB) and an eNB 51 is a target eNB (a Target eNB).

Firstly, the eNB 21 transmits a "Handover required" to the combo node (the MME 23) (S51). Next, the combo node (the MME 23) transmits a "Handover request" to the eNB 51, which is the Target eNB (S52). The "Handover request" includes the IP add #A and the TEID-P information that are set to the pSGW 25. Next, the eNB 51 transmits a "Handover request ack" to the combo node (the MME 23) (S53). The "Handover request ack" includes an IP add #D and TEID-R information that are set to the eNB 51.

When a router connected to the eNB 51 is a Router 52, which is different from the Router 22, the combo node (the FC 24) transmits the "Routing policy update" to the Router 52 (S54). The "Routing policy update" specifies that when the IP add #A is set as the destination IP address and data to which the TEID-P is set is transmitted, the destination IP address is changed to the IP add #B and the TEID is changed to the TEID-O so as to transfer the data. When the transmitted routing policy is reflected, the Router 52 transmits the "Routing policy update ack" to the combo node (the FC 24) (S55).

Next, the combo node (the MME 23) transmits a "Handover command" to the eNB 21 in order to instruct an execution of handover (S56). Further, the eNB 21 transmits the "Handover command" to the UE (S57).

Next, the eNB 51 transmits a "Handover Notify" to the combo node (the MME 23) in order to notify the combo node (the MME 23) that the UE has been handed over to an area managed by the eNB 51 (S58). Next, the combo node (the FC 24) transmits the "Routing policy update" to the Router 31 (S59). The "Routing policy update" specifies that when the IP add #A is set as the destination IP address and data to which the TEID-N is set is transmitted, the destination IP address is changed to the IP add #D and the TEID is changed to the TEID-R so as to transfer the data. When the transmitted routing policy is reflected, the Router 31 transmits the "Routing policy update ack" to the combo node (the FC 24) (S60).

As explained above, by the use of the flow of the path control processing explained using Fig. 9, even when an eNB on which the UE camps is changed by handover, the EPS bearer can be set between the eNB 51 and the PGW 32 by controlling the paths of the Routers 31 and 52 using the FC 24.

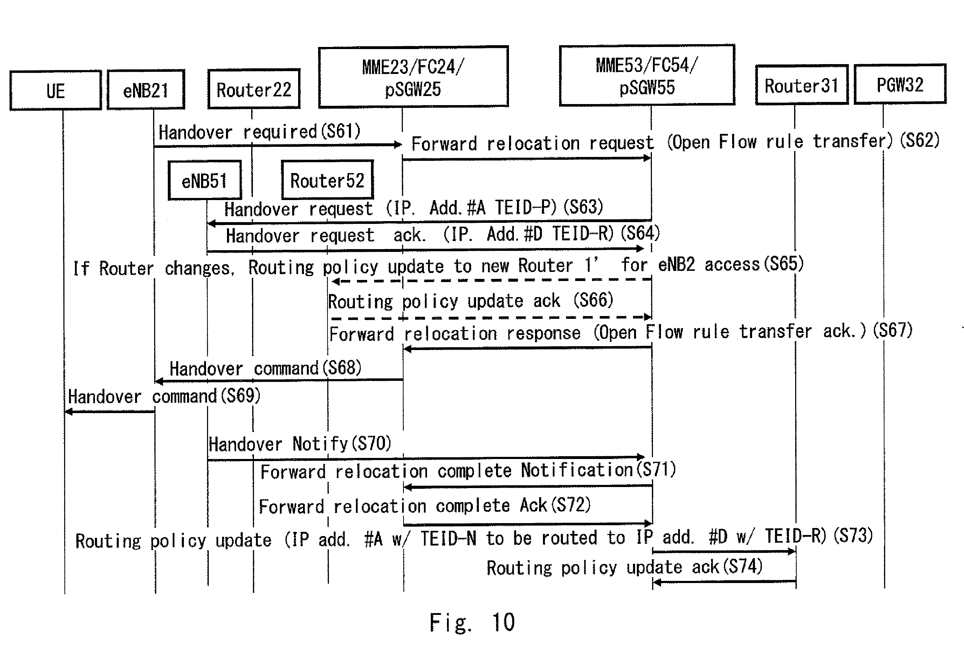

Next, a flow of the path control processing at the time of handover (S1 based HO MME change) when the MME is changed shall be explained using Fig. 10. Firstly, the eNB 21 transmits the "Handover required" to the combo node (the MME 23) (S61). When the combo node (the MME 23) transfers management of the UE to an MME 53, which is another MME, by the handover, the combo node (the MME 23) transmits a "Forward relocation request" to the combo node (the MME 53) (S62). The combo node that has received the "Forward relocation request" is an apparatus in which the MME 53, an FC 54, and a pSGW 55 are configured as the same apparatus. The "Forward relocation request" includes the OpenFlow rule. The OpenFlow rule is a control rule for data packets that is applied by the Routers 22 and 31. For example, the OpenFlow rule may be the routing policy transmitted from the FC 24 to the Routers 22 and 31.

As Steps S63 to S66 are similar to Steps S52 to S55 in Fig. 9, a detailed explanation of Steps S63 to S66 shall be omitted. After Step S66, the combo node (the MME 53) transmits a "Forward relocation response" to the combo node (the MME 23) (S67).

As Steps S68 to S70 are similar to Steps S56 to S58 in Fig. 9, a detailed explanation of Steps S68 to S70 shall be omitted. After Step S70, the combo node (the MME 53) transmits a "Forward relocation complete Notification" to the combo node (the MME 23) (S71). The combo node (the MME 23) transmits a "Forward relocation complete Ack" to the combo node (the MME 53) (S72). As Steps S73 and S74 are similar to Steps S59 and S60 in Fig. 9, a detailed explanation of Steps S73 and S74 shall be omitted.

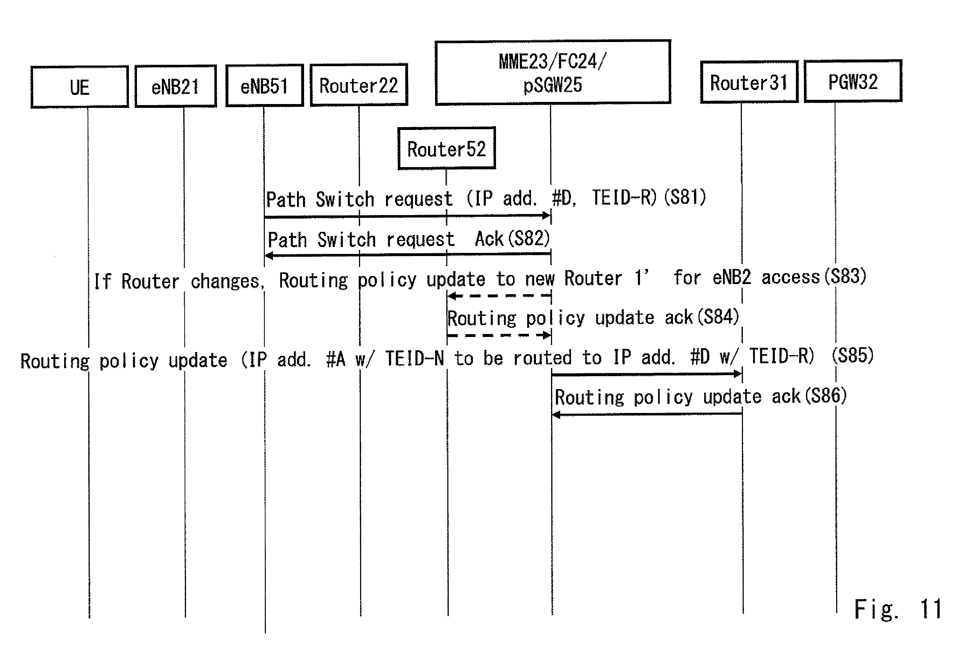

Next, a flow of the path control processing at the time of handover (X2 based HO) using an X2 interface shall be explained using Fig. 11. The X2 interface is an interface between eNBs that are specified by 3GPP. When the DL traffic is transmitted to the eNB 21, which is the source eNB, in the X2 based HO, the DL traffic is transmitted to the eNB 51, which is a target eNB. In such a state, the eNB 51 transmits a "Path Switch request" to the combo node (the MME 23) (S81). The "Path Switch request" includes the IP add #D and the TEID-R information that are set to the eNB 51. Next, the combo node (the MME 23) transmits a "Path Switch request Ack" to the eNB 51 as a response signal to the "Path Switch request".

As Steps S83 and S84 are similar to Steps S54 and S55 in Fig. 9, a detailed explanation of Steps S83 and S84 shall be omitted. Further, as Steps S85 and S86 are similar to Steps S59 and S60 in Fig. 9, a detailed explanation of Steps S85 and S86 shall be omitted.

### (Third exemplary embodiment)

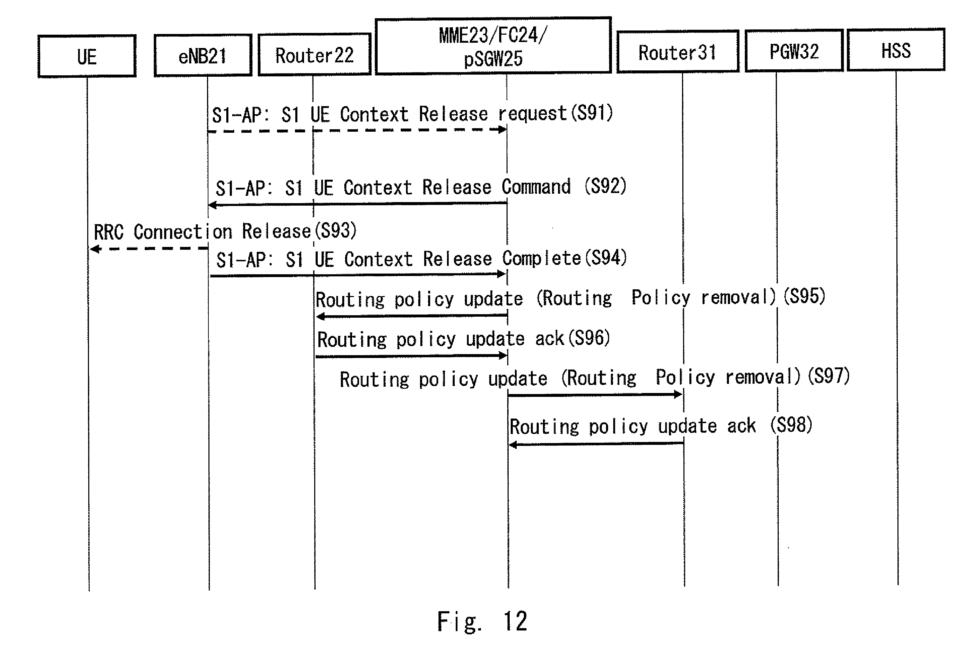

Next, a flow of processing when the UE transitions to an Idle state shall be explained using Fig. 12. Firstly, for example, when a connection between the communication system and the UE is released by the transition of the UE to the Idle state, the eNB 21 transmits a "S1-AP:S1 UE Context Release request" to the combo node (the MME 23) (S91). Next, the combo node (the MME 23) transmits an "S1-AP:S1 UE Context Release Command" to the eNB 21 (S92). Next, the eNB 21 transmits an "RRC Connection Release" to the UE (S93). Next, the eNB 21 transmits an "S1-AP:S1 UE Context Release Complete" to the combo node (the MME 23) in order to notify the combo node (the MME 23) of a release of a resource with the UE (S94).

Next, the combo node (the FC 24) transmits the "Routing policy update" to the eNB 21 (S95). The "Routing policy update" specifies that the routing policy transmitted from the combo node (the FC 24) to the Router 22 shall be deleted. When the Router 22 deletes the routing policy, the Router 22 transmits the "Routing policy update ack" to the combo node (the FC 24) (S96). Next, the combo node (the FC 24) transmits the "Routing policy update" to the Router 31 (S97). The "Routing policy update" specifies that the routing policy transmitted from the combo node (the FC 24) to the Router 31 shall be deleted. After the Router 31 deletes the routing policy, the Router 31 transmits the "Routing policy update ack" to the combo node (the FC 24) (S98).

As explained above, by executing the processing shown in Fig. 12, it is possible for the combo node to receive the "S1-AP:S1 UE Context Release request" that is transmitted from the eNB 21. In the combo node, the MME 23 and the pSGW 25 are contained in the same apparatus. Therefore, the MME 23 is not required to transmit a signal for requesting deletion of the bearer to the pSGW 25. It is thus possible to reduce the number of signals on a communication network.

### (Fourth exemplary embodiment)

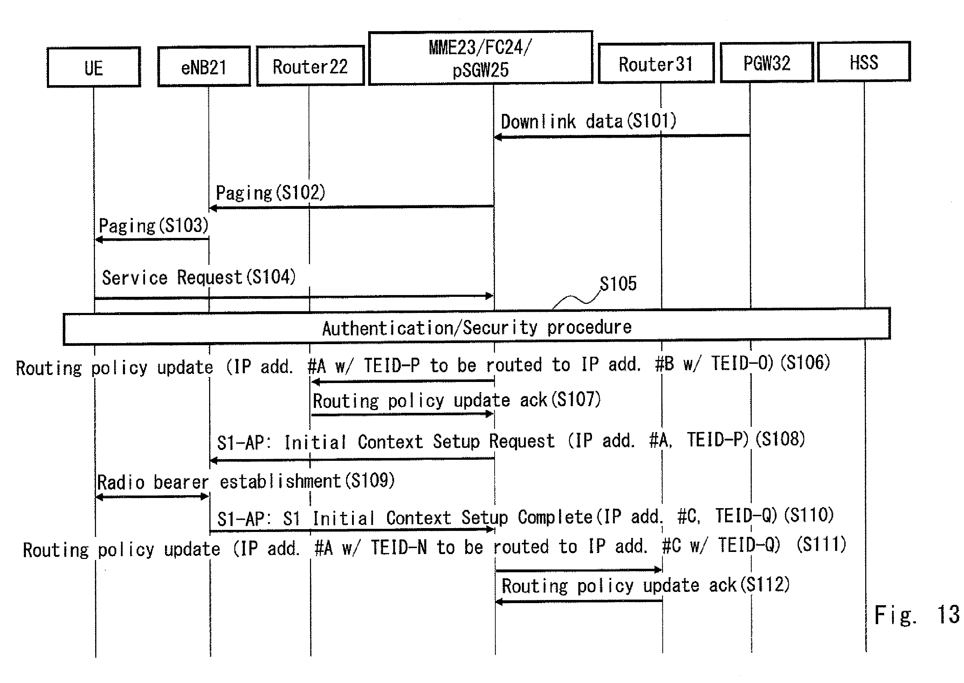

Next, a flow of NW initiated Service Request processing when the DL traffic reaches the UE from an External network shall be explained using Fig. 13. Firstly, the combo node (the MME 23 and the pSGW 25) receives Downlink User Data or a control signal that needs to be transmitted to a terminal from the PGW 32 (S101). Next, the combo node (the MME 23) transmits a Paging signal to the eNB 21 (S102). Further, the eNB 21 also transmits a Paging signal to the UE (S103).

Next, the UE transmits the "Service Request" to the combo node (the MME 23) (S104). In a related node, processing such as authentication on the UE is executed (S105). Next, the combo node (the FC 24) transmits the "Routing policy update" to the Router 22 (S106). The "Routing policy update" specifies that when the IP add #A is set as the destination IP address and data to which the TEID-P is set is transmitted, the destination IP address is changed to the IP add #B and the TEID is changed to the TEID-O so as to transfer the data. When the transmitted routing policy is reflected, the Router 22 transmits the "Routing policy update ack" to the combo node (the FC 24) (S107).

Next, the combo node (the MME 23) transmits an "S1-AP:Initial Context Setup Request" to the eNB 21. The "S1-AP:Initial Context Setup Request" includes the IP add #A and the TEID-P information that are set to the pSGW 25. Next, the eNB 21 transmits a "Radio bearer establishment" to the UE (S109).

Next, the eNB transmits an "S1-AP:Initial Context Setup Complete" to the combo node (the MME 23) (S110). The "S1-AP:Initial Context Setup Complete" includes the IP add #C and the TEID-Q information that are set to the eNB 21. As Steps S111 and S112 are similar to Steps S41 and S42 in Fig. 8, a detailed explanation of Steps S111 and S112 shall be omitted.

Note that the present invention is not limited to the above exemplary embodiments, and modifications can be made without departing from the scope as appropriate.

Although the present invention has been explained with reference to the exemplary embodiments, the present invention is not limited by the above. Various modifications, obvious to those skilled in the art, can be made to the configurations and details of the present invention within the scope of the invention.

The present application claims priority rights of and is based on Japanese Patent Application No. 2012-102742 filed on April 27, 2012 in the Japanese Patent Office, the entire contents of which are hereby incorporated by reference.

### Reference Signs List

- 11: DATA TRANSFER APPARATUS
- 12: GATEWAY
- 13: PATH CONTROL APPARATUS
- 14: VIRTUAL RELAY APPARATUS
- 20: RAN
- 21: eNB
- 22: Router
- 23: MME
- 24: FC
- 25: pSGW
- 30: EPC
- 31: Router
- 32: PGW
- 33: Service server
- 41: RNC
- 42: SGSN
- 51: eNB
- 52: Router
- 53: MME
- 54: FC
- 55: pSGW

## Claims

1. A communication system comprising:
a data transfer apparatus;
a gateway for performing predetermined data processing on data transferred from the data transfer apparatus; and
path control means for controlling, when data addressed to a virtual relay apparatus is transmitted to the data transfer apparatus, the data transfer apparatus to set a destination of the data to the gateway and to transfer the data to the gateway without transferring the data to the virtual relay apparatus.

2. The communication system according to Claim 1, further comprising:
a mobile management apparatus for performing mobile management on a mobile communication apparatus;
a first data transfer apparatus that is connected to a base station or a base station management apparatus, the base station managing an area on which the mobile communication apparatus camps, and the base station management apparatus managing the base station; and
a second transfer apparatus that is connected to the gateway, wherein
the path control means,
when data addressed to the virtual relay apparatus transmitted from the mobile communication apparatus is transmitted to the first data transfer apparatus, sets a destination of the data to the gateway, and
when data addressed to the virtual relay apparatus transmitted from the gateway is transmitted to the second data transfer apparatus, sets the destination to the base station or the base station management apparatus so as to transfer the data.

3. The communication system according to Claim 2, wherein
when a request for registration of the mobile communication apparatus is transmitted from the mobile communication apparatus to the mobile management apparatus, the path control means
controls the first data transfer apparatus to set a destination of user data addressed to the virtual relay apparatus transmitted from the mobile communication apparatus to the gateway and to transfer the user data to the gateway without transferring the user data to the virtual relay apparatus.

4. The communication system according to Claim 2 or 3, wherein
when a request for connection to an external network connected to the gateway is transmitted from the mobile communication apparatus to the mobile management apparatus, the path control means
controls the first data transfer apparatus to set the destination of the user data addressed to the virtual relay apparatus transmitted from the mobile communication apparatus to the gateway and to transfer the user data to the gateway without transferring the user data to the virtual relay apparatus.

5. The communication system according to any one of Claims 2 to 4, further comprising:
a first base station for managing an area on which the mobile communication apparatus currently camps; and
a second base station for managing a target area of the mobile communication apparatus, wherein
when a handover request is transmitted from the first base station to the mobile management apparatus by a movement of the mobile communication apparatus from the first base station to the second base station, the path control means,
when the data addressed to the virtual relay apparatus transmitted from the gateway is transmitted to the second data transfer apparatus, sets the destination to the second base station so as to transfer the data.

6. The communication system according to Claim 5, wherein
the second base station is connected to a third data transfer apparatus that is different from the first and second data transfer apparatuses,
when the hand over request is transmitted from the first base station to the mobile management apparatus by the movement of the mobile communication apparatus from the first base station to the second base station, the path control means,
when the data addressed to the virtual relay apparatus transmitted from the mobile communication apparatus is transmitted to the third data transfer apparatus, sets the destination to the gateway so as to transfer the data.

7. The communication apparatus according to any one of Claims 1 to 6, wherein
the path control means is a flow controller for performing path control on data transferred in the data transfer apparatus by a unit of flow.

8. The communication system according to any one of Claims 1 to 7, wherein
the gateway is a PGW or a base station specified in a 3GPP technical specification.

9. The communication system according to any one of Claims 1 to 8, wherein
the virtual relay apparatus has a function of an SGW that is specified in the 3GPP technical specification.

10. A method for path control of a communication system including a data transfer apparatus and a gateway for performing predetermined data processing on data transmitted from the data transfer apparatus, the method comprising:
controlling, when data addressed to a virtual relay apparatus is transmitted to the data transfer apparatus, the data transfer apparatus to set a destination of the data to the gateway and to transfer the data to the gateway without transferring the data to the virtual relay apparatus.

11. The method according to Claim 10, wherein
when a request for registration of a mobile communication apparatus is transmitted from the mobile communication apparatus to a mobile management apparatus for performing mobile management on the mobile communication apparatus,
address information of the gateway is identified, and
when data having a destination address to the virtual relay apparatus is transmitted to the data transfer apparatus, the data transfer apparatus is controlled so that a destination address of the data is set as an address of the gateway and the data is transferred to the gateway without transferring the data to the virtual relay apparatus.

12. The method according to Claim 10, wherein
when a request for connection to an external network connected to the gateway is transmitted from the mobile communication apparatus to a mobile management apparatus for performing mobile management on the mobile communication apparatus,
address information of the gateway is identified, and
when data having a destination address to the virtual relay apparatus is transmitted to the data transfer apparatus, the data transfer apparatus is controlled so that a destination address of the data is set as an address of the gateway and the data is transferred to the gateway without transferring the data to the virtual relay apparatus.

13. The method according to Claim 10, wherein
when the mobile communication apparatus moves from a first base station for managing an area on which the mobile communication apparatus currently camps to a second base station for managing a target area of the mobile communication apparatus, and further, when data transmitted from the gateway and addressed to the virtual relay apparatus is transmitted to the gate transfer apparatus,
a destination of the data transmitted to the data transfer apparatus is set to the second base station so as to transfer the data.
